# EUROPEAN PATENT APPLICATION

(11) **EP 1 085 731 A2**
(43) Date of publication of application: **21.03.2001**
(21) Application number: 00119381.2
(22) Date of filing: 11.09.2000
(51) Int. Cl.: H04M 1/73

(54) **Telephone having a power saving function**

(30) Priority: 14.09.1999 JP 26122399
(71) Applicant: Pioneer Corporation, Meguro-ku, Tokyo (JP)
(72) Inventor: Kawamura, Katsuaki, Ohaza Yamada, Kawagoe-shi, Saitama (JP)
(74) Representative: Klingseisen, Franz, Dipl.-Ing.

(57) **Abstract**

A telephone having a power saving function in which characters or an image is displayed at high precision and a brightness of a display portion may be suppressed at the time of a telephone communication. A sensor for detecting an ambient brightness of the earpiece holes of the telephone is arranged in a surface of the telephone having the earpiece holes, particularly adjacent the earpiece holes, for adjusting the brightness of the display portion based on the sensor output.

## Description

### BACKGROUND OF THE INVENTION

### Field of the Invention

The invention relates to a telephone and, more particularly, to a power saving function for suppressing brightness of a display portion when the telephone is in use.

### Description of the Related Art

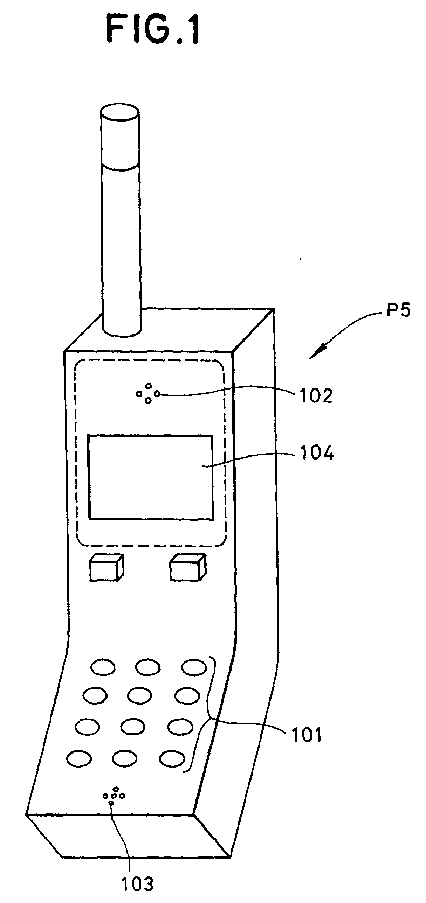

In recent years, there are many telephones each having a display portion for displaying a telephone number and various information about a calling party for the sake of the called party's convenience regarding a telephone communication. Fig. 1 shows a cellular phone P5 as an example of a conventional telephone having a display portion.

In Fig. 1, the cellular phone P5 has: earpiece portion 102 having a plurality of small holes for emitting sound from an speaker built in the main surface side of telephone body on which operation buttons 101 are provided; and microphone holes 103, through which a microphone collects the sound of a speaker's voice. Near the earpiece holes 102, a display portion 104 is further provided having a display apparatus, such as a liquid crystal panel. The display portion 104 displays simple numeral information such as a telephone number or the like of a calling party at the time of transmission or reception, and in recent years, the display portion constructed by high density dots can display a variety of information such as images, a large amount of character information, or the like.

However, by providing a high density display portion 104, characters displayed in the display portion 104 become finer, it becomes more difficult for the operator to recognize the characters. For example, when a display portion 104 is constructed by a matrix type liquid crystal display apparatus, the operator recognizes the formed fine characters created by a difference of transmittance of each display pixel of the display portion 104. Therefore, as the display pixel becomes smaller and as the density increases, it becomes more difficult to distinguish the difference of transmittance of each display pixel. As a result, it becomes difficult to recognize the characters.

Hitherto, a backlight for illuminating the display portion 104 which has been lit only when the ambience is dark, is lit even when the ambience is bright, thereby enabling the operator to always clearly recognize fine characters by the strong light of the backlight.

However, according to the above construction, while the operator is communicating to a calling party with the ear put to the earpiece holes 102, that is, even in the case where the operator does not need to see the display portion 104, power consumption from a power source due to the lighting of the backlight is continuously performed.

### OBJECTS AND SUMMARY OF THE INVENTION

The invention is made in consideration of the above problem and it is an object of the invention to provide a telephone having a power saving function in which characters or an image can be displayed with high precision and the brightness of a display portion when the telephone is in use while the operator puts the ear to earpiece holes can be suppressed.

According to the first aspect of the invention, there is provided a telephone in which a sensor for detecting ambient brightness of the earpiece holes is arranged on a surface of the earpiece holes of the telephone.

According to the second aspect of the invention, the sensor is arranged adjacent the earpiece holes.

According to the third aspect of the invention, there is provided a telephone in which an optical guide portion for guiding light to a sensor for detecting ambient brightness of the earpiece holes is formed on a surface of the earpiece holes of the telephone.

According to the fourth aspect of the invention, the optical guide portion is arranged adjacent the earpiece holes.

According to the fifth aspect of the invention, a display portion for displaying information and control means are further provided for adjusting the brightness of the display portion based on an output of the sensor.

According to the invention, when the operator makes a telephone communication with the ear put to the earpiece holes, since the sensor is covered by the ear of the operator, the sensor detects a reduction in ambient brightness and outputs the detection result. Control means of the telephone determines that the operator is in a conversation with the ear adjacent the earpiece holes, based on the output of the sensor, thereby suppressing the brightness of the display portion. Consequently, the power consumption necessary to illuminate the display portion can be reduced.

Furthermore, the optical guide portion is provided near the earpiece holes in the surface having the earpiece holes of the telephone in place of the sensor. The optical guide portion guides the ambient brightness of the telephone to the sensor. Therefore, an operation similar to that in the case where the sensor is arranged near the earpiece holes can be obtained irrespective of the arranging position of the sensor.

### BRIEF DESCRIPTION OF THE PREFERRED EMBODIMENTS

Fig. 1 is a figure showing an example of a conventional telephone having a display portion;
Fig. 2 is an external view of a cellular phone P1 as a telephone in the first embodiment of the invention;
Fig. 3 is a schematic illustration of a main portion of the cellular phone P1 in the first embodiment of the invention;
Fig. 4 is an external view of a cellular phone P2 in the second embodiment of the invention;
Fig. 5 is a schematic illustration of a main portion of the cellular phone P2 in the second embodiment of the invention;
Fig. 6 is a schematic illustration of a main portion of a cellular phone P3 in the third embodiment of the invention; and
Fig. 7 is a schematic illustration of a whole cellular phone P4 in the other embodiment of the invention.

### DETAILED DESCRIPTION OF THE PREFERRED EMBODIMENTS

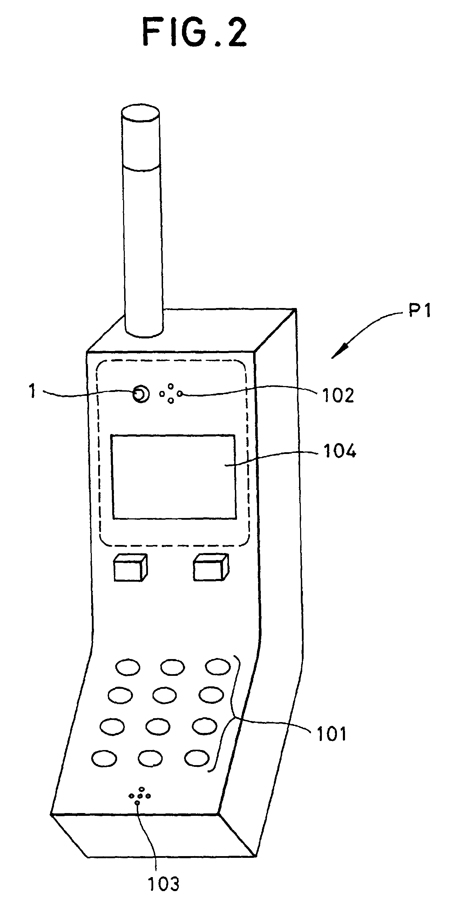

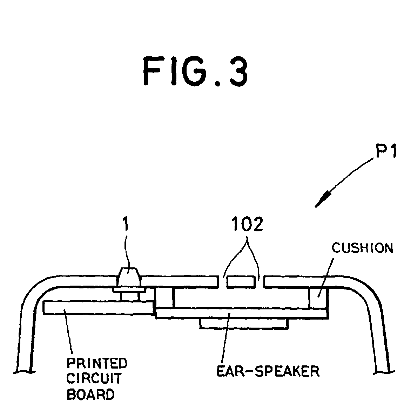

Preferred embodiments of the invention will now be described with reference to the drawings. Figs. 2 and 3 are schematic illustrations of a main portion of a cellular phone P1 in the first embodiment of the invention. Fig. 2 shows an external view of the cellular phone P1. Fig. 3 is a structure figure of the main portion when it is seen from a cross section near the earpiece holes 102 of a main surface in which the earpiece holes 102 of the cellular phone P1 are formed. In Figs. 2 and 3, component portions equivalent to those of the conventional cellular phone P5 described above are designated by the same reference numerals and detailed descriptions are omitted here. The cellular phone P1 has a photosensor 1, the earpiece holes 102, display portion 104, and control means (not shown). The display portion 104 is constructed by a liquid crystal panel display apparatus having a backlight. Adjustments of flickering and brightness of the backlight are performed by a control operation of the control means.

The photosensor 1 which functions as a sensor is a photosensing device having a photodiode, a phototransistor, a CCD, a cds device, or the like. As shown in Fig. 3, the photosensor 1 is connected to a photosensing circuit of a printed circuit board and connected to a hole formed in the surface of the telephone adjacent the earpiece holes.

A position described by "near the earpiece holes 102" denotes a region covered by the ear of the operator in the surface having the earpiece holes 102 of the cellular phone P1, in the case where the operator communicates with the ear adjacent the earpiece holes 102. The region is shown by a broken line in Fig. 2. The photosensor 1 detects the ambient brightness near the earpiece holes 102 and supplies a detection signal to the photosensing circuit connected to the photosensor 1. The photosensing circuit supplies an signal according to an output of the photosensor 1 to the control means (not shown) of the cellular phone P1.

The control means adjusts the backlight brightness of the display portion 104 based on the output of the photosensor 1. That is, the control means preliminarily stores a magnitude (threshold value) of the output generated from the photosensing circuit in the case where it is generated from the photosensor 1 in accordance with a predetermined brightness. Then, the magnitude of the output generated from the photosensing circuit is compared with the stored threshold value. When the present magnitude of the output is larger than the threshold value, the backlight is controlled so that the backlight brightness of the display portion 104 is equal to a predetermined ordinary brightness. When the present magnitude of the output is smaller than the threshold value, the backlight is controlled so that the brightness of the backlight of the display portion 104 is equal to a predetermined brightness which is darker than the predetermined ordinary brightness.

The cellular phone P1 has a construction similar to that mentioned above and, when the telephone is in use, the control means properly controls the backlight brightness based on the ambient brightness as detected near the earpiece holes 102 by the photosensor 1, thereby adjusting the brightness of the display portion 104.

Therefore, when the ambience is bright, in the cellular phone P1, since a region near the earpiece holes 102 is bright, the photosensor 1 detects the brightness and emits the detection signal which is proportional to the ambient brightness of the earpiece holes 102 to the photosensing circuit. Hence, the photosensing circuit supplies an output according to the detection signal of the photosensor 1 to the control means. Consequently, the control means controls the backlight so that the backlight brightness of the display portion 104 is equal to the predetermined ordinary brightness when the telephone is used.

As a result, since the display portion 104 is illuminated by the ordinary brightness by the backlight, the operator can clearly recognize high precision characters, images, or the like displayed in the display portion 104 even under a bright environment in the daytime.

When the ambience is dark, in the cellular phone P1, since a region near the earpiece holes 102 is dark, the photosensor 1 detects the brightness level and outputs the detection output which is proportional to the ambient brightness of the earpiece holes 102 to the photosensing circuit. Therefore, the photosensing circuit supplies the signal according to the detection signal of the photosensor 1 to the control means. Consequently, the control means controls the backlight so that the backlight brightness of the display portion 104 is equal to the predetermined brightness which is darker than the predetermined ordinary brightness when the telephone is used.

Thus, the display portion 104 is illuminated by the predetermined brightness that is darker than the ordinary brightness by the backlight. Therefore, unnecessary power consumption of a power source of the cellular phone P1 is suppressed and the operator can clearly recognize high precision characters, images, or the like displayed in the display portion 104 even under a dark environment at night-time or the like.

In the cellular phone P1, since the photosensor 1 is arranged near the earpiece holes 102, when the operator's ear is adjacent the earpiece holes 102, in order to communicate to a calling party, the region near the earpiece holes 102 is blocked by the ear from the ambient light. Thus, the ambience of the earpiece holes 102 of the cellular phone P1 becomes dark. Therefore, the photosensing circuit supplies the signal according to the detection signal of the photosensor 1 to the control means. As a result, the control means controls the backlight so that the brightness of the backlight of the display portion 104 is equal to a predetermined brightness which is darker than the predetermined ordinary brightness. That is, in the cellular phone P1, since there is no need to see the display portion 104 while the operator is communicating with the ear put to the earpiece holes 102, the brightness of the backlight is adjusted by the control means so as to be equal to the predetermined brightness which is darker than the predetermined ordinary brightness. Therefore, the unnecessary power consumption of the power source of the cellular phone P1 is suppressed. In case of viewing the display portion 104 during the telephone communication, the sensor 1 again detects the ambient brightness at a point when the operator removes the ear from the earpiece holes 102, and the lighting is adjusted again to a proper light intensity by the control means. Thus, the operator can clearly recognize the high precision characters, image, or the like displayed in the display portion 104.

In the cellular phone P1, although the sensor for detecting the ambient brightness has been arranged in the surface having the earpiece holes, the arranging position of the sensor in the invention is not limited to the position. That is, it is also possible to arrange an optical guide portion into the surface having the earpiece holes of the telephone and guide the ambient brightness to the sensor by the optical guide portion. The optical guide portion here denotes a portion for guiding the ambient brightness to the sensor. The optical guide portion has an optical guide hole for guiding the ambient brightness to the sensor in a strait-line path as well as an optical guide member which can guide the ambient brightness to the sensor , or the like in a non-strait-line path. Embodiments of the optical guide portions are described below.

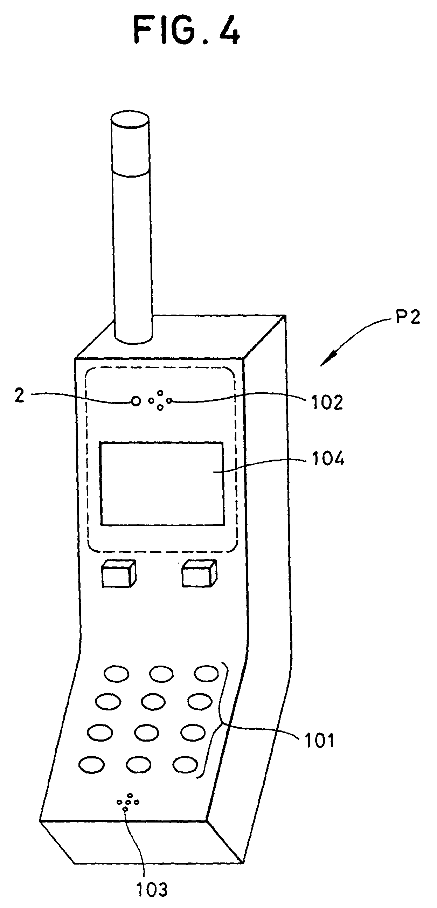

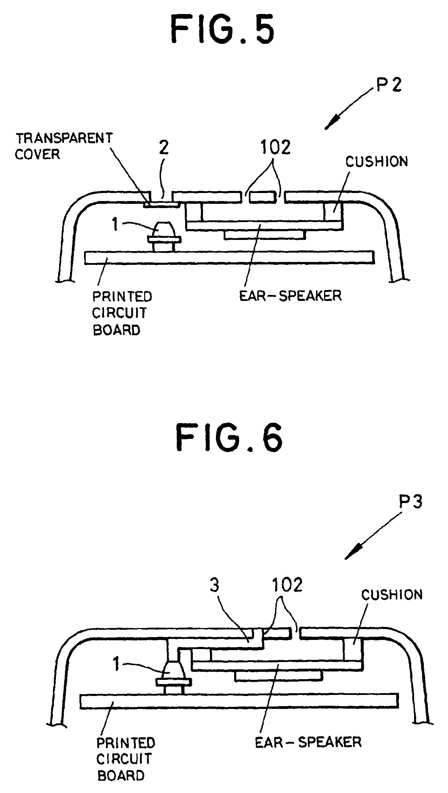

Figs. 4 and 5 are schematic illustrations of a main portion of a cellular phone P2 in the second embodiment of the invention. Fig. 4 is an external view of the cellular phone P2. Fig. 5 is a structure of the main portion seen from a cross section near the earpiece holes 102 of a main surface in which the earpiece holes 102 of the cellular phone P2 are formed. In Figs. 4 and 5, component portions corresponding to those of the cellular phone P1 described above are designated by the same reference numerals and their detailed descriptions are omitted here. The cellular phone P2 has the photosensor 1, an optical guide hole 2 as an optical guide portion, the earpiece holes 102, display portion 104, and control means (not shown). In the cellular phone P2, the optical guide hole 2 having a small hole is provided near the earpiece holes 102 in the surface having the earpiece holes 102. The photosensor 1 is connected to a photosensing circuit of a printed circuit board in the equipment main body in a state where it is arranged in the equipment main body just under the optical guide hole 2. Also in the cellular phone P2 shown in Fig. 4, a region near the earpiece holes 102 is shown by a broken line. The optical guide hole 2 guides the ambient brightness of the earpiece holes 102 to the photosensor 1. A cover made of a transparent glass or plastic is arranged on the inside of the main body of the optical guide hole 2. Therefore, dirt and dust is prevented from entering the main body and the light guided by the optical guide hole 2 is guided to the photosensor 1 without attenuation.

The photosensor 1 detects the brightness of the ambient light of the earpiece holes 102 guided by the optical guide hole 2 and supplies a detection signal to the photosensing circuit connected to the photosensor 1. The photosensing circuit supplies a signal according to the output signal of the photosensor 1 to control means (not shown) of the cellular phone P2.

The control means of the cellular phone P2 adjusts the backlight brightness of the display portion 104 based on the output signal of the photosensor 1 in a manner similar to that done by the control means in the cellular phone P1. Hence, a detailed explanation of the control operation of the control means is omitted here.

Since the cellular phone P2 has the construction mentioned above, when the telephone is in use, the photosensor 1 detects the brightness of the ambient light of the earpiece holes 102 guided by the optical guide hole 2. Then, the control means properly controls the brightness of the illumination of the backlight based on the ambient brightness of the earpiece holes 102 detected by the photosensor 1, thereby adjusting the brightness of the display portion 104.

In case of the cellular phone P2, the optical guide hole 2 is arranged near the earpiece holes 102 in the surface having the earpiece holes 102. Therefore, for example, when the operator's ear is adjacent to a region near the earpiece holes 102 to communicate to a calling party, since the region near the earpiece holes 102 is blocked by the ear from the ambient light, even when the ambience of the cellular phone P2 is bright or even when it is dark, the ambience of the earpiece holes 102 becomes dark. That is, the ambient brightness of the earpiece holes 102 always decreases due to the ear of the operator during the telephone communication. Hence, the photosensor 1 detects the brightness of the ambient light of the earpiece holes 102 guided by the optical guide hole 2 and generates a detection signal which is proportional to the brightness to the photosensing circuit. Consequently, the photosensing circuit supplies a signal according to the detection signal of the photosensor 1 to the control means. As a result, the control means controls the backlight so that the backlight brightness of the display portion 104 is equal to a predetermined brightness which is darker than the predetermined ordinary brightness. That is, in the cellular phone P2, since there is no need to view the display portion 104 while the operator is communicating with the ear placed to the earpiece holes 102, the backlight brightness is adjusted by the control means so as to be equal to the predetermined brightness which is darker than the predetermined ordinary brightness. Therefore, unnecessary power consumption of the power source of the cellular phone P2 is suppressed. When the operator views the display portion 104 during the telephone communication, the ambient brightness is detected by the sensor 1 via the optical guide hole 2 at a point when the operator uncovers the earpiece holes 102. Since the illuminance is adjusted again to a proper light quantity by the control means, the operator can clearly recognize the high precision characters, images, or the like displayed in the display portion 104.

In the cellular phone P2, the optical guide hole 2 has been arranged near the earpiece holes 102 in the surface having the earpiece holes 102. And the ambient light of the earpiece holes 102 guided by the optical guide hole 2 is detected by the photosensor 1 located just under the optical guide hole 2 inside the main body to have its brightness detected. However, the invention is not limited to this construction. For example, the ambient brightness may also be guided to the photosensor 1 by using an optical guide member which guides the light to the sensor via a non-straight path. An embodiment in this case will be described below.

Fig. 6 is a schematic illustration of a main portion of a cellular phone P3 in the third embodiment of the invention. Fig. 6 illustrates the structure of the main portion seen from a cross section near the earpiece holes 102 of a main surface in which the earpiece holes 102 of the cellular phone P3 are formed. In Fig. 6, component portions corresponding to those of the cellular phone P2 described above are designated by the same reference numerals and their detailed descriptions are omitted here. The cellular phone P3 has the photosensor 1, an optical guide member 3 as an optical guide portion for guiding the ambient light to the photosensor 1, the earpiece holes 102, and display portion 104 and control means which are not shown. In the cellular phone P3, one end of the optical guide member 3 having an optical fiber or the like having high optical guide performance engages with one of a plurality of holes constructing the earpiece holes 102. The photosensor 1 is provided in the main body of the cellular phone P3 and connected to a photosensing circuit of a printed circuit board provided likewise in the main body. The other end of the optical guide member 3 is optically connected to the photosensor 1. The light guided to one end of the optical guide member 3 passes through the inside of the optical guide member 3 without being attenuated and is guided to the photosensor 1. Then, the photosensor 1 detects the brightness of the ambient light of the earpiece holes 102 via the optical guide member 3 which is the optical guide portion. The photosensor 1 then supplies a detection signal to the photosensing circuit connected to the photosensor 1. The photosensing circuit supplies an signal according to the output signal of the photosensor 1 to the control means (not shown) of the cellular phone P3.

The control means of the cellular phone P3 adjusts the backlight brightness of the display portion 104 (not shown) based on the output signal of the photosensor 1 in a manner similar to that in the cellular phone P2. Therefore, description of the control operation of the control means is omitted.

Since the cellular phone P3 has a construction mentioned above, when the telephone is in use, the photosensor 1 detects the brightness of the ambient light of the earpiece holes 102 guided via the optical guide member 3 which is an optical guide portion. Then, the control means accordingly controls the brightness of the illumination of the backlight based on the ambient brightness of the earpiece holes 102 detected by the photosensor 1 in a manner similar to the case of the cellular phone P2, thereby adjusting the brightness of the display portion 104.

In each of the aforementioned embodiments, examples wherein the cellular phone control means controls the brightness of the illumination of the backlight based on the output signal of the photosensor 1 which functions as a sensor, thereby adjusting the brightness of the liquid crystal panel display apparatus as a display portion has been shown. However, the invention is not limited to the examples. The brightness of the liquid crystal panel display apparatus can be also adjusted by controlling a contrast or brightness of the liquid crystal panel display apparatus by the control means based on the output signal of the sensor.

Although the display portion in each of the embodiments has been constructed by the liquid crystal panel display apparatus having the backlight, the display portion is not limited to the construction. For example, it may be replaced with a display apparatus using an organic EL (electroluminescence) device or the like. That is, a display portion whose brightness can be adjusted by the control means may be used. With regard to the type of the display device constructing the display portion, either a self-luminous type which emits a light spontaneously or a non-self-luminous type may be used.

Although a cellular phone has been used as an example to describe the invention , the telephone of the invention is not limited to a cellular phone. For example, the invention may be applied to a mounted type telephone which is generally used at home or to a TV telephone which displays a video image. That is, a video image which is displayed in the display portion is not limited to characters or a static image but may also be a motion image.

The control means in each of the above embodiments functions to switch the brightness of the backlight in the lit state to either the predetermined ordinary brightness or the predetermined brightness darker than the predetermined ordinary brightness based on the output signal of the photosensor 1. However, the invention is not limited to such specific control but the control means may control the brightness of the backlight in the lit-on state to a brightness according to a magnitude of the signal of the photosensor 1 within a range of a predetermined brightness based on the signal output signal of the photosensor 1. The control means may also provide a control so that the brightness is switched to that of one of a plurality of brightness levels.

It is also possible to construct the invention in such a manner that a hand-free apparatus is preliminarily connected to a telephone. This allows the control means to control the telephone so as to switch it to a hand-free mode in parallel with the control operation for adjusting the brightness of the display portion based on the output signal of the sensor. Thus, in the case where the operator removes the ear from the earpiece holes 102 while he is communicating with the ear put to the earpiece holes 102 of the telephone, the control means switches the operating mode to the hand-free mode based on the sensor output. Consequently, the operator may listen to the conversation of the party without interruption of the conversation.

In addition to the above controls, the control means may switch voice signal output to an external speaker previously connected to the telephone in parallel with the control operation for adjusting the brightness of the display portion based on the sensor output. For example, in the case where the operator removes the ear from the earpiece holes 102 while communicating with the ear put to the earpiece holes 102 of the telephone, a conversation voice is generated from the external speaker. Consequently, the operator may listen to the contents of the conversation such as weather information, traffic information, or the like by many persons as necessary.

In the cellular phone P1, the example in which the photosensor 1 is arranged near the earpiece holes 102 in the surface having the earpiece holes 102, namely, in the region which is covered by the ear of the operator in the case where he communicates with the ear put to the earpiece holes 102 has been described. The invention is not limited to the example. It will be understood that, in the case where the operator communicates with the ear put to the earpiece holes 102, the sensor may be provided in a region corresponding to a face portion other than the ear of the operator in the surface having the earpiece holes 102, namely, in a region which is covered by the mouth, cheek, chin, or the like, for example, in a region near the microphone holes 103.

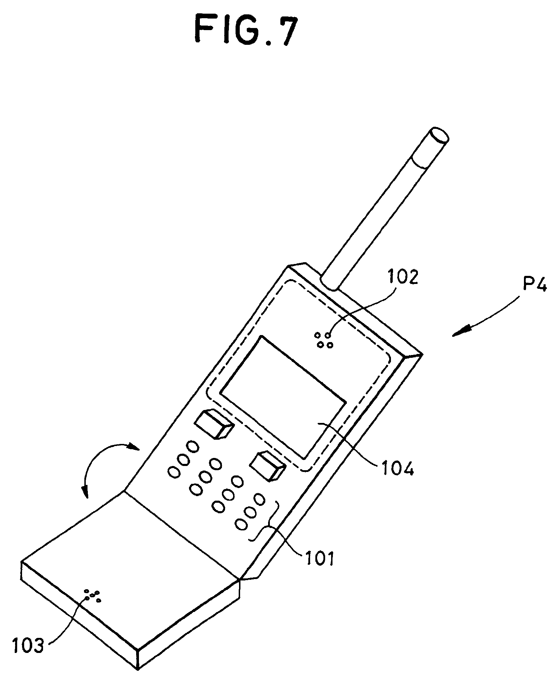

Each of the aforementioned embodiments has been described under the condition that the surface having the earpiece holes is set to the main surface of the cellular phone in which the earpiece holes are always exposed to the outside. However, the surface having the earpiece holes in the invention is not limited to such structure. For example, as shown by a cellular phone P4 as a telephone according to another embodiment shown in Fig. 7, in the case where the telephone is a cellular phone of a folding type in which the surface having the microphone holes 103 covers the earpiece holes 102, the surface having the microphone holes 103 is also included in the surface having the earpiece holes in the invention.

The preferred embodiments of the present invention have been described. It will be obviously understood that those skilled in the art can presume many modifications and variations. All of the modifications and variations are incorporated in the scope of claims of the invention.

## Claims

1. A telephone comprising a sensor for detecting ambient brightness adjacent to earpiece holes of the telephone, said sensor arranged on a surface of the telephone having said earpiece holes.

2. A telephone according to claim 1, wherein said sensor is arranged adjacent said earpiece holes.

3. A telephone comprising an optical guide portion for guiding light to a sensor for detecting ambient brightness adjacent earpiece holes of the telephone on a surface of the telephone having said earpiece holes.

4. A telephone according to claim 3, wherein said optical guide portion is adjacent said earpiece holes.

5. A telephone according to claim 1, further comprising a display portion for displaying information and a control means for adjusting the brightness of said display portion based on an output of said sensor.

6. A telephone according to claim 3, further comprising a display portion for displaying information and a control means for adjusting the brightness of said display portion based on an output of said sensor.
